Europäisches Patentamt

European Patent Office

Office européen des brevets

(19)

(11) Veröffentlichungsnummer : **0 160 332 B1**

(12) **EUROPÄISCHE PATENTSCHRIFT**

(45) Veröffentlichungstag der Patentschrift :
28.03.90

(21) Anmeldenummer : 85200520.6

(22) Anmeldetag : 04.04.85

(51) Int. Cl.⁵ : **B 01 D 53/34, C 01 B 17/04**

(54) Verfahren zum Entfernen von Schwefelwasserstoff aus Abgas und zum Erzeugen von Schwefel nach dem Claus-Prozess.

(30) Priorität : 27.04.84 DE 3415722

(43) Veröffentlichungstag der Anmeldung :
06.11.85 Patentblatt 85/45

(45) Bekanntmachung des Hinweises auf die Patenterteilung : 28.03.90 Patentblatt 90/13

(84) Benannte Vertragsstaaten :
AT BE DE FR GB IT NL SE

(56) Entgegenhaltungen :
DE--A-- 1 963 027
DE--A-- 3 302 131
GB--A-- 1 470 950
US--A-- 3 681 024

(73) Patentinhaber : METALLGESELLSCHAFT AG
Reuterweg 14 Postfach 3724
D-6000 Frankfurt/M.1 (DE)

(72) Erfinder : Fischer, Herbert
Holzmühlerweg ·67
D-6304 Lollar (DE)
Erfinder : Kriebel, Manfred, Dr.
Tiroler Strasse 61
D-6000 Frankfurt am Main 70 (DE)

(74) Vertreter : Rieger, Harald, Dr.
Reuterweg 14
D-6000 Frankfurt am Main (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Entfernen von Schwefelwasserstoff aus einem $H_2S$-haltigen Einsatzgas durch das Claus-Verfahren und Erzeugen von elementarem Schwefel, wobei man das Einsatzgas mit sauerstoffhaltigem Gas in einer thermischen Claus-Anlage mit mindestens einer Brennkammer partiell verbrennt und dabei Temperaturen im Bereich von 850 bis 1 350 °C aufrechterhält, erzeugtes Prozeßgas durch eine katalytische Claus-Anlage (Claus-katalyse) leitet und Schwefel abzieht, das Abgas der Claus-Katalyse einer Entschwefelungsanlage aufgibt und die Schwefelverbindungen des Abgases der Entschwefelungsanlage in einer thermischen Nachbehandlung zu $SO_2$ umwandelt und ein $SO_2$-haltiges Abgas erzeugt. Durch das Verfahren werden auch geringe Mengen anderer Schwefelverbindungen, wie COS, $CS_2$ und Methylmerkaptane, mit entfernt.

Das Verfahren und die dazu gehörigen Anlagenteile sind bekannt, eine ausführliche Darstellung findet sich in Ullmanns Enzyklopädie der Technischen Chemie, 4. Auflage (1982), Band 21, Seiten 8 bis 26. Aus DE-A-1 963 027 ist es bekannt, ein Defizit an Einsatzgas durch Verbrennungsgas, das in einer Stützfeuerung erzeugt wird, auszugleichen.

In der thermischen Claus-Anlage wird das $H_2S$-haltige Einsatzgas mit Luft oder mit Sauerstoff angereicherter Luft zu einem Gemisch aus $H_2S$ und $SO_2$ verbrannt, wobei ein Molverhältnis der beiden Bestandteile von 2 : 1 angestrebt wird. In der Claus-Katalyse erfolgt die Umsetzung von 2 $H_2S$ + $SO_2$ zu Elementarschwefel und Wasser, dabei können $Al_2O_3$-Katalysatoren mit Oberflächen von 200 bis 300 m²/g Verwendung finden. Für die anschließende Entschwefelungsanlage gibt es mehrere spezielle Verfahren, bei denen die Schwefelverbindungen durch Adsorption und/oder Absorption entfernt werden. Die thermische Nachbehandlung ist allgemein eine Nachverbrennung, in der sämtliche Schwefelverbindungen in Schwefeloxid umgewandelt werden.

Beim erfindungsgemäßen Verfahren ist die Aufgabe gestellt, auch bei stark wechselnden Mengen an Einsatzgas einen zufriedenstellenden Betrieb der Anlagenteile zu erreichen und Probleme, die durch Unterschreiten des Schwefeltaupunkts und der Erstarrungsgrenze des Schwefels entstehen können, mit Sicherheit zu vermeiden. Beim eingangs genannten Verfahren wird dies dadurch erreicht, daß man dem $H_2S$-haltigen Einsatzgas, wenn seine Menge pro Zeiteinheit einen Grenzwert unterschreitet, der bei 20 bis 35 % der für die thermische Claus-Anlage zulässigen Gesamtmenge an Einsatzgas liegt, dem Einsatzgas eine solche Menge an zurückgeführtem Abgas der Entschwefelungsanlage (Rückführgas) zumischt, daß das Gemisch aus Einsatzgas und Rückführgas den Grenzwert überschreitet, wobei das Rückführgas vor dem Mischen mit dem Einsatzgas auf 200 bis 400 °C erhitzt wird, und daß man gasförmigen Brennstoff unter Beimischen von Wasserdampf separat verbrennt und die Verbrennungsgase mit den bei der Verbrennung des $H_2S$-haltigen Einsatzgases entstehenden Gasen vermischt. Das Rückführgas, das die der thermischen Claus-Anlage zugeführte Gasmenge erhöht, sorgt für ausreichendes Beaufschlagen und Durchspülen der verschiedenen Anlagenteile. Dadurch wird es möglich, die Gesamtanlage auch nur mit einer Teilmenge an $H_2S$-haltigem Einsatzgaz zu betreiben, die 5 % und auch noch etwas weniger der maximal zulässigen Menge an Einsatzgas beträgt.

Das Rückführgas wird vor dem Mischen mit dem Einsatzgas auf 200 bis 400 °C und vorzugsweise 250 bis 350 °C erhitzt, damit das der thermischen Claus-Anlage zugeführte Gemisch aus Einsatzgas und Rückführgas die für eine schnelle Verbrennung nötige Zündtemperatur aufweist. Außerdem enthält das Rückführgas noch Schwefeldampf, der bei zu niedriger Temperatur auskondensieren, erstarren und so zu Verstopfungen führen könnte. Die Erhitzung des Rückführgases kann mittels Fremdenergie oder durch indirekten Wärmeaustausch mit dem $SO_2$-haltigen Abgas der thermischen Nachbehandlung erfolgen.

Es gehört zum Verfahren, daß man gleichzeitig mit dem Rückführgas gasförmigen Brennstoff und Wasserdampf in eine zur Brennkammer gehörende Stützfeuerung leitet. Diese Stüfzfeuerung ist nötig, da das Rückführgas keinen nennenswerten Heizwert besitzt. Beim Einsatz der Stützfeuerung besteht jedoch die Gefahr, daß zusammen mit dem gasförmigen Gemisch aus $H_2S$ und $SO_2$ auch Ruß in die Claus-Katalyse gelangt. Dieser Ruß findet sich im abgeschiedenen Schwefel wieder, er verfärbt diesen und macht ihn für die Weiterverarbeitung weniger geeignet. Es ist deshalb nötig, daß die Stützfeuerung mit Zugabe von Wasserdampf betrieben wird, der die Rußbildung unterdrückt. Üblicherweise setzt man pro kg gasförmigem Brennstoff 1 bis 3 kg Wasserdampf zum Unterdrücken der Rußbildung ein.

Der für die rußfreie Verbrennung in der Brennkammer der thermischen Claus-Anlage nötige Wassersdampf kann auch in Form wasserdampfhaltiger Agbase, die auf diese Weise aufgearbeitet werden, herangeführt werden. So ist es z. B. in Raffinerien möglich, ein bei der Gasreinigung anfallendes wasserdampfhaltiges Gas, etwa das Sauerwasserstrippergas, für die Stützfeuerung zu verwenden.

Ausgestaltungen des Verfahrens werden mit Hilfe der Zeichnung erläutert. Es zeigt :

Fig. 1 die Verfahrensführung in schematischer Darstellung und

Fig. 2 in schematischer Darstellung die Brennkammer der thermischen Claus-Anlage.

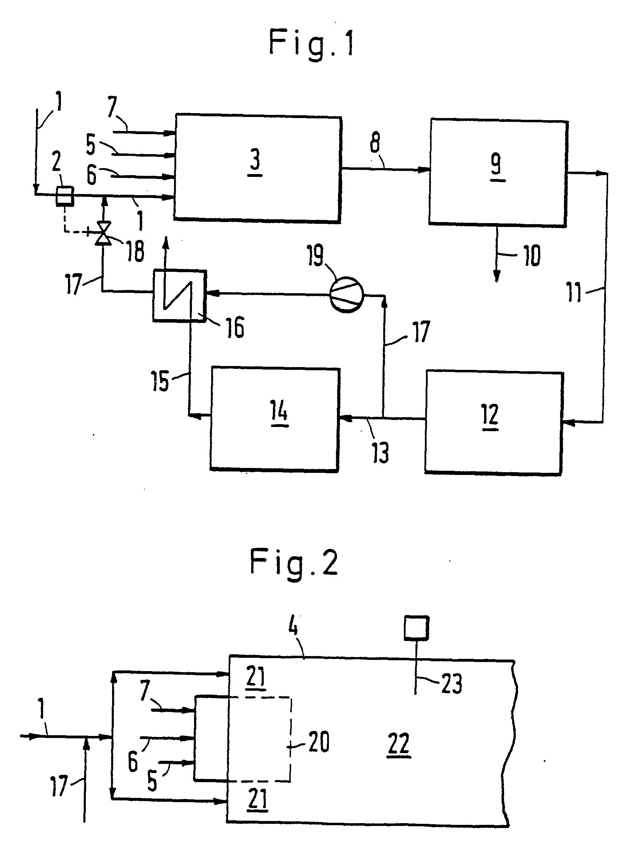

Das aufzuarbeitende $H_2S$-haltige Einsatzgas kommt aus Leitung 1, die einen Durchflußmengen-Analysator 2 aufweist, und wird der thermischen Claus-Anlage 3 zugeführt. Das Kernstück dieser Anlage 3, der Brenner 4, ist in Figur 2 vereinfacht dargestellt und wird weiter unten erläutert. Zur Anlage 3 führen des weiteren eine Leitung 5 für Luft, eine Leitung 6 für gasförmigen Brennstoff und eine Leitung 7 für Wasserdampf. Durch die in der thermischen Claus-Anlage 3 erfolgende Verbrennung entstehen Temperaturen im Bereich von 850 bis 1 350 °C.

Das in der Anlage 3 erzeugte gekühlte Prozeßgas gelangt in der Leitung 8 mit Temperaturen im Bereich von 260 bis 300 °C in die katalytische Claus-Anlage 9, die kurz auch Claus-Katalyse genannt wird. Bei der Claus-Katalyse 9 handelt es sich um eine mehrstufige Anlage, die Elementarschwefel erzeugt, der in der Leitung 10 abgeführt wird.

Das Abgas der Claus-Katalyse 9 wird in der Leitung 11 zur Feinreinigung einer Entschwefelungsanlage 12 zugeführt. Das Abgas der Anlage 12 weist je nach Feinreinigungsverfahren einen Schwefel-Gehalt von höchstens etwa 100-1 000 ppmv auf. Damit ist das Einsatzgas der Leitung 1 zu mindestens 99 % entschwefelt. Das Abgas der Anlage 12 wird ganz oder teilweise in der Leitung 13 einer thermischen Nachbehandlung 14 zugeführt, in welcher die Schwefelverbindungen vollständig zu $SO_2$ verbrannt werden. Das $SO_2$-haltige Abgas der Nachbehandlung 14 wird in der Leitung 15 abgeführt und gibt einen Teil seiner fühlbaren Wärme im Wärmeaustauscher 16 ab.

Die Mengen des Einsatzgases der Leitung 1 können stark schwanken. Deshalb ist es nötig, beim Unterschreiten einer Mengengrenze, die im Bereich von 20 bis 35 % der Maximalmenge liegt, dem Einsatzgas der Leitung 1 Rückführgas aus der Leitung 17 zuzumischen. Bei diesem Rückführgas handelt es sich um einen Teilstrom des Abgases der Leitung 13, dessen Menge durch den Analysator 2, der ein Regelventil 18 steuert, eingestellt wird. Das Rückführgas der Leitung 17 wird durch ein Gebläse 19 gefördert, dieses Rückführgas ist praktisch frei von Sauerstoff und weist einen Schwefelgehalt von weniger als 100 ppm auf.

Der Betrieb des Brenners 4, der zur thermischen Claus-Anlage 3 gehört, wird mit Hilfe der Figur 2 erläutert. Wenn die Durchflußmenge des $H_2S$-haltigen Einsatzgases der Leitung 1 so weit abgesunken ist, daß die Zufuhr von Rückführgas aus der Leitung 17 nötig wird, ist im allgemeinen auch eine Stützfeuerung erforderlich. Für diese Stützfeuerung ist eine innere Brennkammer 20 vorhanden, der man durch die Leitung 5 Luft oder mit Sauerstoff angereicherte Luft, durch Leitung 6 den nötigen gasförmigen Brennstoff und durch die Leitung 7 Wasserdampf zuführt. Dabei wird angestrebt, in der inneren Brennkammer 20 eine unterstöchiometrische Verbrennung durchzuführen. Der Ringraum 21 um die innere Brennkammer 20 herum wird mit dem Gemisch aus Einsatzgas und Rückführgas beaufschlagt. Die Verbrennungsprodukte der inneren Brennkammer 20 und des Ringraums 21 mischen sich in der Mischkammer 22 des Brenners 4, in welcher Temperaturen von 850 bis 1 350 °C herrschen. Zur Temperaturkontrolle dient ein Thermoelement 23, über das sich z. B. die Zufuhr von Heizgas in der Leitung 6 regeln läßt. Diese Regelung kann aber auch durch eine Bedienungsperson erfolgen. Die innere Brennkammer 20 sorgt dafür, daß der gasförmige Brennstoff der Stützfeuerung rußfrei verbrannt ist, bevor er mit schwefel-haltigem Gas in Kontakt kommt. Dadurch ist es möglich, in der Claus-Katalyse gelben, praktisch rußfreien Schwefel zu erzeugen.

### Beispiel

Einer der Zeichnung entsprechenden Anlage, die für eine maximale Einsatzgasmenge von 3 200 Nm³/h ausgelegt ist, wird nur 5 % dieser Menge, d. h. 160 Nm³/h Einsatzgas zugeführt. Die Zusammensetzung des Einsatzgases ist folgende :

| | |
|---|---|
| $H_2S$ | 82,73 Vol.% |
| $CH_4$ | 0,06 Vol.% |
| $C_{2+}$ | 0,10 Vol.% |
| $CO_2$ | 17,08 Vol.% |
| $N_2$ | 0,03 Vol.%. |

Diesem Einsatzgas werden pro Stunde durch die Leitung 17 530 Nm³ Rückführgas zugemischt, damit erreicht die Menge des Gasgemisches 21,5 % der Maximalmenge.
Das Rückführgas setzt sich zusammen aus (trocken gerechnet) :

| | |
|---|---|
| $N_2$ | 94,1612 Vol.% |
| $CO_2$ | 3,2000 Vol.% |
| $H_2$ | 2,5000 Vol.% |
| Spurenbestandteile | 0,1388 Vol.% |

Die Spurenbestandteile bestehen aus :

| | |
|---|---|
| $SO_2$ | 407 ppmv |
| $H_2S$ | 814 ppmv |
| COS | 24 ppmv |
| $CS_2$ | 3 ppmv |
| Elementarschwefel | 140 ppmv |

# EP 0 160 332 B1

Das Rückführgas hat einen $H_2O$-Gehalt von ca. 38 Vol.%.
Der thermischen Claus-Anage 3 werden außerdem zugeführt:

| | |
|---|---|
| Luft durch Leitung 5 : | 350 Nm³/h |
| Heizgas durch Leitung 6 : | 50 Nm³/h |
| Wasserdampf durch Leitung 7 : | 100 kg/h |

Die Luft führt zu einer unterstöchiometrischen Verbrennung, da ihre Menge nur 72 % der stöchiometrisch erforderlichen Luftmenge entspricht. Für die Entschwefelungsanlage 12 wird das an sich bekannte Sulfreen-Verfahren verwendet. Der Schwefel ist leuchtend gelb.

## Patentansprüche

1. Verfahren zum Entfernen von Schwefelwasserstoff aus einem H2S-haltigen Einsatzgas durch das Claus-Verfahren und Erzeugen von elementarem Schwefel, wobei man das Einsatzgas mit sauerstoffhaltigem Gas in einer thermischen Claus-Anlage mit mindestens einer Brennkammer partiell verbrennt und dabei Temperaturen im Bereich von 850 bis 1350 °C aufrechterhält, erzeugtes Prozeßgas durch eine katalytische Claus-Anlage (Claus-Katalyse) leitet und Schwefel abzieht, das Abgas der Claus-Katalyse einer Entschwefelungsanlage aufgibt und die Schwefelverbindungen des Abgases der Entschwefelungsanlage in einer thermischen Nachbehandlung zu SO2 umwandelt und ein SO2-haltiges Abgas erzeugt, dadurch gekennzeichnet, daß man dem H2S-haltigen Einsatzgas, wenn seine Menge pro Zeiteinheit einen Grenzwert unterschreitet, der bei 20 bis 35 % der für die thermische Claus-Anlage zulässigen Gesamtmenge an Einsatzgas liegt, dem Einsatzgas eine solche Menge an zurückgeführtem Abgas der Entschwefelungsanlage (Rückführgas) zumischt, daß das Gemisch aus Einsatzgas und Rückführgas den Grenzwert überschreitet, wobei das Rückführgas vor dem Mischen mit dem Einsatzgas auf 200 bis 400 °C erhitzt wird, und daß man gasförmigen Brennstoff unter Beimischen von Wasserdampf separat verbrennt und die Verbrennungsgase mit den bei der Verbrennung des H2S-haltigen Einsatzgases entstehenden Gasen vermischt.

2. Verfahren nach Anspruch 1, dadurch gekennzeichnet, daß man das Rückführgas durch indirekten Wärmeaustausch mit dem SO2-haltigen Abgas der thermischen Nachbehandlung erhitzt.

## Claims

1. Process for removing hydrogen sulphide from a feed gas containing $H_2S$ by the Claus process and producing elemental sulphur, where the feed gas is partially burnt with gas containing oxygen in a thermal Claus process plant with at least one combustion chamber and thereby temperatures in the range of 850 to 1 350 °C are maintained, the resulting process gas is taken through a catalytic Claus process plant (Claus catalysis) and sulphur is drawn off, the waste gas of the Claus catalysis is supplied to a desulphurisation plant and the sulphur compounds of the waste gas of the desulphurisation plant are converted to $SO_2$ in a thermal after treatment and a waste gas containing $SO_2$ is produced, characterized by the fact that the feed gas containing $H_2S$, if its amount per unit time falls below a limit, which is 20 to 35 % of the total quantity of feed gas used for the thermal Claus process plant, such a quantity of recycled waste gas of the desulphurisation plant (recycled gas) is mixed with the feed gas, so that the mixture of feed gas and recycled gas exceeds the limit, where the recycled gas is heated up to 200 to 400 °C before mixing with the feed gas, and that the gaseous fuel, mixed with steam, is burnt separately and the combustion gases are mixed with the gases resulting from the combustion of the $H_2S$-containing feed gas.

2. Process according to Claim 1, characterized by the fact that the recycled gas is heated by indirect heat exchange with the waste gas containing $SO_2$ from the thermal after treatment.

## Revendications

1. Procédé d'élimination de l'hydrogène sulfuré d'un gaz de charge contenant $H_2S$ par le procédé Claus et de préparation de soufre élémentaire, qui consiste à brûler partiellement le gaz de charge par du gaz contenant de l'oxygène dans une installation de Claus thermique ayant au moins une chambre de combustion, et à le maintenir ainsi à des températures comprises entre 850 et 1 350 °C, à envoyer le gaz du procédé obtenu dans une installation de Claus catalytique (catalyse de Claus), et à en retirer le soufre, à charger l'effluent gazeux de la catalyse de Claus dans une installation de désulfuration, et à transformer en $SO_2$ dans un post-traitement thermique les composés soufrés de l'effluent gazeux de l'installation de désulfuration et à produire un effluent gazeux contenant du $SO_2$, caractérisé en ce qu'il consiste à mélanger au gaz de charge contenant du $H_2S$, si sa quantité par unité de temps devient inférieure à un seuil qui représente de 20 à 35 % de la quantité totale de gaz de charge admissible pour l'installation de

4

Claus thermique, une quantité telle d'effluent gazeux recyclé de l'installation de désulfuration (gaz recyclé) que le mélange de gaz de charge et de gaz recyclé dépasse le seuil, le gaz recyclé étant porté entre 200 et 400 °C avant d'être mélangé au gaz de charge, et à brûler indépendamment le combustible gazeux en le mélangeant à de la vapeur d'eau, et à mélanger les gaz de combustion au gaz créé par la combustion du gaz de charge contenant du $H_2S$.

2. Procédé suivant la revendication 1, caractérisé en ce qu'il consiste à chauffer le gaz recyclé par échange indirect de chaleur avec l'effluent gazeux contenant du $SO_2$ du post-traitement thermique.

# Fig.1

# Fig.2